Europäisches Patentamt

European Patent Office

Office européen des brevets

(19)

(11) EP 0 863 465 A1

(12) EUROPEAN PATENT APPLICATION

(43) Date of publication:
09.09.1998 Bulletin 1998/37

(51) Int Cl.⁶: G06F 13/12

(21) Application number: 98301406.9

(22) Date of filing: 26.02.1998

(84) Designated Contracting States:
AT BE CH DE DK ES FI FR GB GR IE IT LI LU MC NL PT
Designated Extension States:
AL LT LV MK RO SI

(30) Priority: 03.03.1997 GB 9704368

(71) Applicant: MADGE NETWORKS LIMITED
Buckinghamshire HP8 4AH (GB)

(72) Inventors:
• Wilson, David
Aylesbury, Bucks, HP21 9UE (GB)
• Draper, Andrew Martyn
Amersham, Bucks, HP7 9NJ (GB)

(74) Representative: Skone James, Robert Edmund
GILL JENNINGS & EVERY
Broadgate House
7 Eldon Street
London EC2M 7LH (GB)

(54) Network interface device and method

(57) A method of controlling the operation of a host processor of a host processing system to which data frames from a communication network are transferred via an interface device. The method comprises monitoring an incoming data frame to determine the length of the frame from a frame header; and generating an interrupt request to the host processor of the host processing system to cause the host processor to process the data frame, at a time during the passage of the data frame into the interface device determined in accordance with a predetermined algorithm based at least on the length of the frame.

Fig.1.

## Description

The invention relates to an interface device such as an adaptor card for transferring data frames from a communication network to a host processing system and to a method of controlling a host processor.

A primary design aim for a network adapter card is the receiving and processing of communication data as quickly as possible whilst using the host processor, the CPU, as little as possible.

The main stages in an host receiving data from a network, via an adapter card, are i) the adapter card receiving data from the network and placing this data into internal buffers, ii) the adapter card interrupting the host and iii) the transfer of the data from the adapter card to memory within the host. Once the host receives the data, the host CPU is then required to process the data.

Traditionally, all network adapter cards handled data in the same fashion. With this method, the data is received into buffers on the adapter card and after the whole frame is received, the host is interrupted and the data is transferred to the host by DMA, PIO or MMIO. This approach does not provide optimum performance as all events occur serially. In addition, if the data transfer from the adapter card to the host is slow, the host CPU utilisation will be fairly high as the CPU will be forced to stay virtually idle in a software loop until the data has been copied from the adapter card to the host.

One improvement on this technique is to stream the data from the network directly into buffers on the host using a DMA master to obtain control of the host bus. This technique reduces the host processor utilisation. However, this technique still requires host processing during the copying of the data from one part of the memory within the host to another. An interrupt will be generated by the adapter card when the whole data frame has been copied into host memory, this interrupt initiates host processing of the data. Even though this method of data transfer will be quicker than storing the data on the adapter card prior to transferring the data to host memory, this method is still not optimum as the data arriving in host memory, interrupt latency and the host processing still occurs serially.

Another method to improve performance is to perform the tasks in parallel. This can be achieved by interrupting the host when the adapter card starts to receive the data frame from the network. This has the advantage of overlapping the interrupt latency (the time between the adapter card signalling an interrupt and the host servicing the interrupt), the time taken to copy the data to the host, and the host processing. This provides optimum performance for the adapter card as it allows higher layer protocols within the host to process the received data virtually as soon as it has been copied to the host memory. However, this performance is at the expense of host processor utilisation. As the interrupt latency and the time for copying data from the adapter card into host memory is small compared to the time taken to receive a long data frame from the network, the host processor will again be virtually idle in a loop while the frame is being received. This method is used in a variety of network adapter cards and is called "data pipelining" or "parallel processing."

US-A-5412782 describes a known method for reducing processing time in which the adapter card contains threshold information defining a certain number of bytes of a received frame and will generate an interrupt request as soon as that threshold is reached. The problem with this approach is that the interrupt will always be generated at the same time for any frame having the threshold number of bytes or more.

In accordance with one aspect of the present invention, a method of controlling the operation of a host processor of a host processing system to which data frames from a communication network are transferred via an interface device comprises monitoring an incoming data frame to determine the length of the frame from a frame header; and generating an interrupt request to the host processor of the host processing system to cause the host processor to process the data frame, at a time during the passage of the data frame into the interface device determined in accordance with a predetermined algorithm based at least on the length of the frame.

In accordance with a second aspect of the present invention, an interface device for connecting a communication network to a host processing system so as to transfer data frames from the communication network to the host processing system via the interface device comprises a control system for monitoring an incoming data frame to determine the length of the frame from a frame header, and for generating an interrupt request to a host processor of the host processing system to cause the host processor to process the data frame, at a time during the passage of the data frame into the interface device determined in accordance with a predetermined algorithm based at least on the length of the frame.

This invention takes advantage of the fact that in most communication protocols, data frames contain a header which defines the length of the frame. This enables the use made of the host processor to be further optimised by relating the time at which an interrupt request is generated to the length of the frame to be received. For example, typically the host processor will process data at a quicker rate (bytes per second) than the rate at which bytes can be transferred. Thus, the interrupt request will be sent after a longer delay for relatively long frames as compared to relatively short frames.

Preferably, the predetermined algorithm also takes account of interrupt latency. Interrupt latency is the time between the generation of the interrupt request and the time at which the host processor responds to it.

The time at which the interrupt request is generated could be defined in absolute terms or as a delay from the time of arrival of the data frame at the interface device. In the preferred arrangement, however, the time for generating the interrupt is defined by the time of arrival of a certain length of the frame. Typically, this will be measured in a number of bytes. Conveniently, this time is determined by monitoring the passage of a frame into the interface device. Alternatively, if the transfer rate is known, the number of bytes could be calculated.

In the preferred arrangement, the interrupt request is generated by the interface device, for example a processor mounted in the interface device although in other cases, another interrupt generator, separate from the interface device, could be used.

The invention can be used with a conventional adapter card arrangement in which the data frame is stored at least partly on the interface device and then processed by the host processor as it is transferred. However, it is particularly convenient to utilise the invention where the data frame is passed via the interface device directly to a store in the host processing system, usually via a buffer, prior to being processed by the host processor. This technique is described in more detail in European Patent Application No. 96309157.4 incorporated herein by reference.

Conventionally, a data frame will be transferred to a store in the host processing system in blocks or packets. For example, if a frame is 1024 bytes in length, this may be broken into four blocks of 256 bytes. These blocks of data will be stored in free locations within the host store and since these locations are not continuous, the data is separated and there is an increase in host processor processing time when reconstructing the data frame.

Preferably, therefore, the data frame is stored as blocks in locations defined by sequential addresses.

This invention has two main implementations, the first is where the host processor initiates the transfer of data from the interface device to host memory followed by further processing of the data, and the second is where the interface device uses a DMA process to transfer the data into host memory followed by the host processing the data. The reference to host processing the frame thus relates to the host transferring data in the first implementation, and the host subsequently processing the data following transfer, in the second application.

An example of a method and interface device according to the invention will now be described with reference to the accompanying drawings, in which:-

Figure 1 is a schematic block diagram of an end station connected to a communication network;
Figure 2 illustrates the format of an IPX frame header; and,
Figure 3 illustrates part of a link list used to identify data stored in host memory in the end station shown in Figure 1.

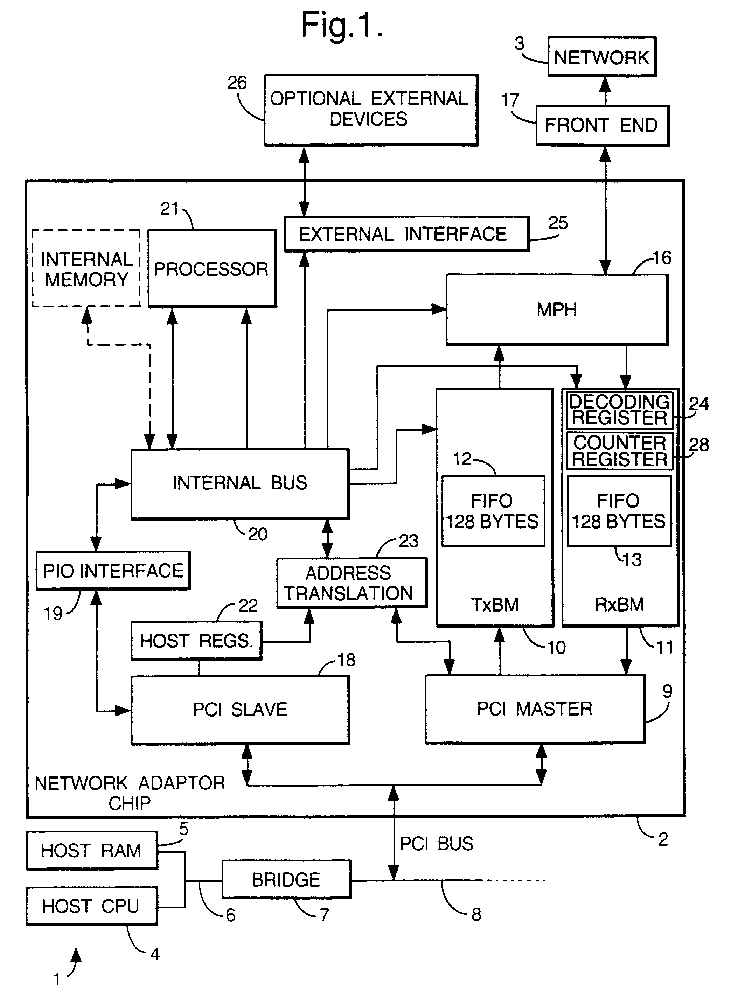

The end station shown in Figure 1 comprises a host device 1 connected to an adapter card 2 which provides an interface between the host device 1 and a communication network 3, such as token ring. The host device 1 includes a host CPU 4 and host RAM 5 linked by a proprietary bus 6. The bus 6 is linked by an interface 7 to a PCI bus 8 which is linked to the adapter card 2.

The adapter card 2 includes a PCI master unit 9 providing a DMA engine, the unit 9 being connected to respective transmit and receive buffer managers 10,11. The receive buffer manager 11 contains a decoding register 27 and a counter register 28. Each buffer manager 10,11 contains a respective FIFO 12,13. The buffer managers 10,11 are connected to a protocol handler 16 described in more detail in W097/08874 (US SN 08/703,531). The protocol handler 16 is connected to front end circuitry 17 of conventional form which provides a link to the network 3.

The PCI bus 8 is also connected to a PCI slave unit 18 which is linked via a PIO interface 19 to an internal bus 20. An on-board processor 21 is connected to the internal bus 20, as is a memory address translation unit 23. The PCI slave unit 18 is also connected to a set of registers 22. An external interface 25, for connection to optional external addresses 26, is connected to the internal bus 20. The transmit buffer manager 10 and the receive buffer manager 11 can be controlled via the internal bus 20.

The PIO interface 19 allows the host processor 4 to access devices attached to the internal bus 20 without the intervention of the on-board processor 21.

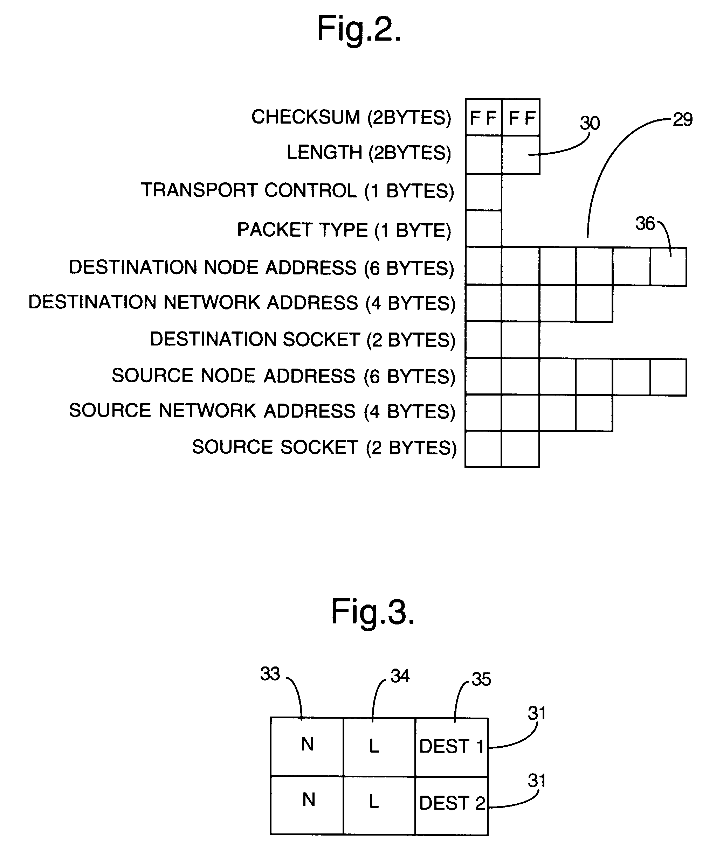

The operation of the end station shown in Figure 1 will be described in connection with the handling of IPX data frames. Such data frames have a header section of the form shown in Figure 2 followed by a data section (not shown). The header section 29 has a two byte length field 30 amongst other standard header information.

Of course, the invention is not limited solely to IPX data frames but can be used with any data frame that contains length information within the frame header, for example IP and ethernet frames. The data can also be of any type and may encapsulate audio and video data.

When an IPX data frame is received from the network 3, it is passed to the front end circuit 17 where it is demodulated and passed to the protocol handler 16. The protocol handler 16 passes frames destined for its own unique adapter address to the receive buffer manager 11. Logic within the receive buffer manager 11 analyses the header section 29 of the incoming frame to determine firstly whether or not that frame is destined for the end station. To do this, it reviews the destination node address 36. If it is not, the frame is passed back to the network 3 without being further processed.

If the frame is destined for the end station, the logic within the receive buffer manager 11 also determines the type of received frame i.e. MAC or data (LLC) and this information is notified to the processor 21, via the internal shared bus 20. Copying of the frame will also stop if there is insufficient space to store the frame in the host memory 5.

Additionally, the logic within the receive buffer manager 11 will determine the frame length from the frame length field 30 and store this information in the decoding register 27.

As the frame is received, it is initially stored within the FIFO of the receive buffer manager 11 and as each byte of the frame is received, the counter register 28 is incremented by one. Almost as soon as the data frame starts to be received in the receive buffer manager 11, the receive buffer manager in conjunction with the DMA engine in the PCI master unit 9, starts to write the frame from the FIFO 13 into the host RAM 5.

While the frame is being received, the processor 21 inspects, via the internal bus 20, the decoding register 27 to determine the frame length. Using this information the processor 21 is able to calculate the amount of time that will be required to transfer the frame to the host memory 5 and the processing time then required by the host CPU 4 to handle the data (i.e. copy to a higher level within the host). Using this information combined with the host interrupt latency period, the processor 21 determines the optimum time to issue an interrupt request to the host CPU 4 to allow the data frame to be processed by the host CPU 4 without wasting host processing time in waiting loops. This optimum time is calculated as a threshold number of bytes of the frame which need to be received.

The processor 21 then inspects, via the internal bus 20, the counter register 28 to determine how many bytes of the frame have been received, and when the calculated threshold number of bytes has been received the processor 21 issues an interrupt request to the host processor by setting a flag in the host register 22.

The host CPU 4 will start to process data in the RAM 5 after receipt of the interrupt request from the adapter card and following the associated interrupt latency. The receive buffer manager 11 will also ensure that the received frame is correctly reported to the rest of the network and having been copied if, and only if, there was sufficient space available in the host RAM 5 to store the entire frame or packet.

The threshold number of bytes which is calculated by the processor 21 will be determined so as to optimise the utilisation of the host CPU 4 and minimise time wasted by the host CPU 4 in waiting for data to arrive in the host RAM 5. This threshold will be based on a number of parameters including:

(a) the rate at which data is received from the network (bytes/sec) ;
(b) the number of bytes in the frame;
(c) the transfer rate from the adapter card 2 to the host RAM 5 (bytes/sec) ;
(d) the interrupt latency; and,
(e) the host processing rate (bytes/sec).

The received data rate (a) will depend primarily on the rate at which the network·3 operates and in the case of token ring will be either 4 or 16MBits. In general, the network 3 will only work at one rate and so this parameter can be stored as a constant within the processor 21.

The transfer rate (c) from the adapter card to the host RAM will also be constant for any particular combination of adapter card with host. The minimum average data rate over a 32 bit PCI bus is 16 Mbytes per sec, the transfer rate varying depending on the bus usage.

The interrupt latency (d) will vary from one host to another but for a given host and adapter card combination will remain substantially constant. The interrupt latency can be calculated by the processor 21 for each host to which it is connected. The processor 21 calculates the interrupt latency by issuing an interrupt service request to the host CPU 5 and calculating the time taken to receive a response. This process is repeated and an average is taken. This value can then be used to calculate the optimum time to issue an interrupt service request.

The host processing rate (e) is a function of the host processor itself and again will be constant for any particular host and can be calculated.

Given that parameters a, c, d, and e will be constant for any combination of adapter card, host and network, the only variable is then the length of the frame (b). A typical algorithm would be:

$$\text{Threshold (secs)} = (a \times b + c \times b) - (d + e \times b)$$

where a-e have the meaning set out above.

The threshold will normally be expressed as a number of bytes received from the network by multiplying by (a).

Typically, the incoming data frame is stored within the host RAM 5 in a series of packets and the location of each packet is defined in a separate link list buffer within the host RAM 5. As shown in Figure 3, the link list buffer is formed by a series of link blocks 31, each corresponding to a separate data packet. Each block 31 comprises three fields, a next pointer 33 specifying the location of the next pointer in the link list, the length of the block of data or data packet 34, and the destination in host memory where the block of data is written 35. Conventionally, the destinations 35 are randomly placed throughout the host RAM 5. However, in the preferred arrangement, the memory destination locations are chosen so that the data frame will be stored sequentially. This has the advantage of reducing the time required to process the data by the CPU 4.

It should be understood that although the invention has been described with reference to hardware components on an adapter card, it can be implemented wholly or partly in software.

## Claims

1. A method of controlling the operation of a host processor of a host processing system to which data frames from a communication network are transferred via an interface device, the method comprising monitoring an incoming data frame to determine the length of the frame from a frame header; and generating an interrupt request to the host processor of the host processing system to cause the host processor to process the data frame, at a time during the passage of the data frame into the interface device determined in accordance with a predetermined algorithm based at least on the length of the frame.

2. A method according to claim 1, wherein the predetermined algorithm is also based on interrupt latency.

3. A method according to claim 1 or claim 2, wherein the time at which the interrupt request is generated is defined by the time of arrival of a certain length of the frame.

4. A method according to claim 3, wherein the length is measured as a number of bytes.

5. A method according to claim 3 or claim 4, wherein the time of arrival of a certain length of the frame is determined by monitoring the passage of a frame into the interface device.

6. A method according to any of the preceding claims, wherein the data frame is passed via the interface device directly to a store in the host processing system, usually via a buffer, prior to being processed by the host processor.

7. A method according to claim 6, wherein the data frame is stored as blocks in locations defined by sequential addresses.

8. An interface device for connecting a communication network to a host processing system so as to transfer data frames from the communication network to the host processing system via the interface device, the device comprising a control system for monitoring an incoming data frame to determine the length of the frame from a frame header, and for generating an interrupt request to a host processor of the host processing system to cause the host processor to process the data frame, at a time during the passage of the data frame into the interface device determined in accordance with a predetermined algorithm based at least on the length of the frame.

9. An interface device according to claim 8, wherein the control system is adapted to carry out a method according to any of claims 1 to 7.

10. A communication system comprising a communication network connected to a host processing system by an interface device according to claim 8 or claim 9.

# Fig.1.

# Fig.2.

| | | | | | | | |
|---|---|---|---|---|---|---|---|
| CHECKSUM (2BYTES) | FF | FF | | | | | |
| LENGTH (2BYTES) | | | | | | | |
| TRANSPORT CONTROL (1 BYTES) | | | | | | | |
| PACKET TYPE (1 BYTE) | | | | | | | |
| DESTINATION NODE ADDRESS (6 BYTES) | | | | | | | |
| DESTINATION NETWORK ADDRESS (4 BYTES) | | | | | | | |
| DESTINATION SOCKET (2 BYTES) | | | | | | | |
| SOURCE NODE ADDRESS (6 BYTES) | | | | | | | |
| SOURCE NETWORK ADDRESS (4 BYTES) | | | | | | | |
| SOURCE SOCKET (2 BYTES) | | | | | | | |

30 29 36

# Fig.3.

33 34 35

| N | L | DEST 1 | 31 |
|---|---|--------|----|
| N | L | DEST 2 | 31 |

**European Patent Office**

**EUROPEAN SEARCH REPORT**

Application Number

EP 98 30 1406

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | US 5 412 782 A (HAUSMAN ET AL) 2 May 1995 <br> * column 7, line 30 - line 68; figure 5 * <br> --- | 1-10 | G06F13/12 |
| A | US 5 319 752 A (PETERSEN ET AL) 7 June 1994 <br> * column 2, line 17 - column 3, line 30 * <br> * column 15, line 54 - column 16, line 21; figure 9A * <br> --- | 1-10 | |
| A | US 5 533 203 A (FISCHER ET AL) 2 July 1996 <br> * column 5, line 30 - column 7, line 4; figure 3 * <br> ----- | 1-10 | |

TECHNICAL FIELDS
SEARCHED (Int.Cl.6)

G06F

The present search report has been drawn up for all claims

| Place of search | Date of completion of the search | Examiner |
|---|---|---|
| THE HAGUE | 26 June 1998 | Gill, S |